(19) Europäisches Patentamt
European Patent Office
Office européen des brevets

(11) **EP 2 773 015 A2**

(12) **EUROPEAN PATENT APPLICATION**

(43) Date of publication:
**03.09.2014 Bulletin 2014/36**

(51) Int Cl.:
**H02J 7/02** *(2006.01)*

(21) Application number: **14154749.7**

(22) Date of filing: **11.02.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **01.03.2013 JP 2013040959**

(71) Applicant: **Kabushiki Kaisha Toshiba
Tokyo 105-8001 (JP)**

(72) Inventors:
• **Shijo, Tetsu
Minato-ku, Tokyo 105-8001 (JP)**
• **Higaki, Makoto
Minato-ku, Tokyo 105-8001 (JP)**
• **Obayashi, Shuichi
Minato-ku, Tokyo 105-8001 (JP)**

(74) Representative: **Granleese, Rhian Jane
Marks & Clerk LLP
90 Long Acre
London WC2E 9RA (GB)**

(54) **Power transmission system**

(57)     In one embodiment, a power transmission system includes a power transmission apparatus having a power source unit supplying a high-frequency power, and a power transmission inductor including a magnetic core and a winding wire portion and wirelessly transmitting the high-frequency power from the power source unit to a power reception apparatus by mutual inductance, and an electromagnetic wave leakage prevention device including one conductive loop or a plurality of conductive loops disposed at predetermined intervals. The power transmission apparatus is disposed in the loop(s). A winding direction of the loop(s) is not perpendicular to a winding direction of the winding wire portion.

FIG.3

EP 2 773 015 A2

## Description

FIELD

Embodiments described herein relate generally to a power transmission system.

BACKGROUND

A technology in which charging of electrical equipment is carried out by wireless power transmission has been known. For example, when a power reception apparatus converts an electromagnetic wave transmitted from a power transmission apparatus into electrical energy, a battery on the power reception apparatus side can be charged.

However, in such wireless power transmission, when a part of the electromagnetic wave is leaked to a surrounding area, there is a problem such that power transmission efficiency is lowered and that surrounding equipment or the like is affected.

BRIEF DESCRIPTION OF THE DRAWINGS

Fig. 1 is a block configuration diagram of a wireless power transmission system using an electromagnetic wave leakage prevention device according to a present embodiment;
Fig. 2 is a block configuration diagram of an electric vehicle, to which the wireless power transmission system is applied;
Fig. 3 is a perspective view of the electromagnetic wave leakage prevention device according to the present embodiment;
Fig. 4 is a graph illustrating changes in electric field intensity according to the present embodiment;
Fig. 5 is a graph illustrating reduction ratios of a leaked electric field according to the present embodiment;
Fig. 6 is a graph illustrating changes in magnetic field intensity according to the present embodiment;
Fig. 7 is a graph illustrating reduction ratios of a leaked magnetic field according to the present embodiment;
Figs. 8A and 8B are diagrams illustrating examples of electric field intensity distributions according to a comparative example;
Figs. 9A and 9B are diagrams illustrating examples of magnetic field intensity distributions according to the comparative example;
Figs. 10A and 10B are diagrams illustrating examples of electric field intensity distributions according to the present embodiment;
Figs. 11A and 11B are diagrams illustrating examples of magnetic field intensity distributions according to the present embodiment; and

Fig. 12 is a perspective view of an electromagnetic wave leakage prevention device according to a variant example.

DETAILED DESCRIPTION

In one embodiment, a power transmission system includes a power transmission apparatus having a power source unit supplying a high-frequency power, and a power transmission inductor including a magnetic core and a winding wire portion and wirelessly transmitting the high-frequency power from the power source unit to a power reception apparatus by mutual inductance, and an electromagnetic wave leakage prevention device including one conductive loop or a plurality of conductive loops disposed at predetermined intervals. The power transmission apparatus is disposed in the loop(s). A winding direction of the loop(s) is not perpendicular to a winding direction of the winding wire portion.

Embodiments will now be explained with reference to the accompanying drawings.

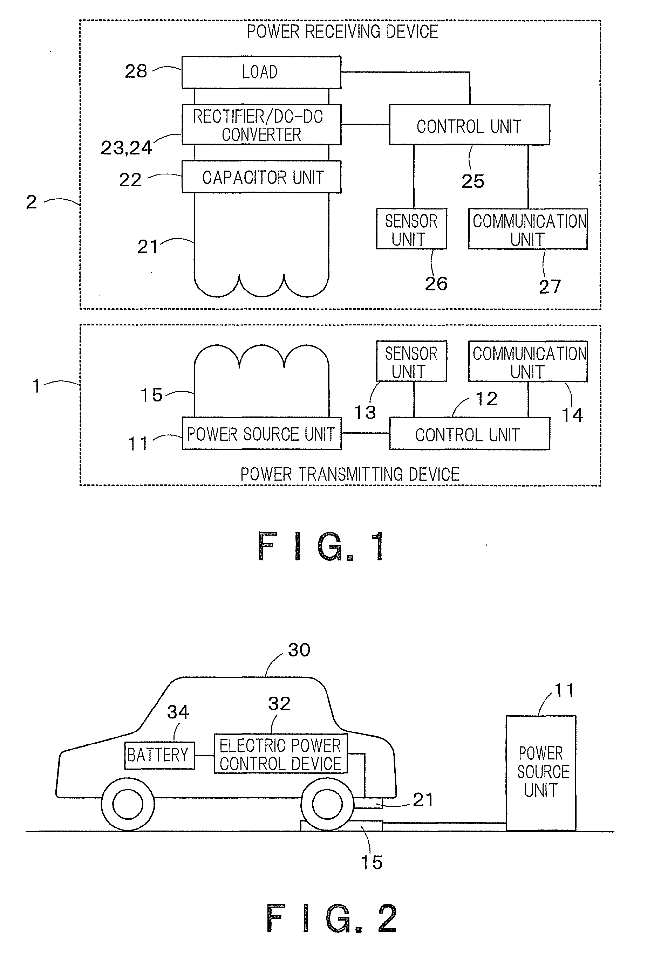

Fig. 1 illustrates a block configuration of a wireless power transmission system using an electromagnetic wave leakage prevention device according to an embodiment of the present invention. The wireless power transmission system includes a power transmission apparatus 1 and a power reception apparatus 2, to which a high-frequency power is wirelessly transmitted from the power transmission apparatus 1. The power reception apparatus 2 supplies the transmitted high-frequency power to a load 28 of electrical equipment. The power reception apparatus 2 may be installed within the electrical equipment, may be installed integrally with the electrical equipment, or may be fixed to an exterior of a main body of the electrical equipment. For example, the electrical equipment is a portable terminal or an electric vehicle, and the load 28 is a rechargeable battery.

The power transmission apparatus 1 includes a power source unit 11 for converting a commercial power to a high-frequency power (an RF power) for power transmission, a control unit 12 for controlling a necessary amount of high-frequency power and controlling each unit of the power transmission apparatus 1, a sensor unit 13, a communication unit 14, and a power transmission inductor 15.

The sensor unit 13 has, for example, a temperature sensor for monitoring heat generation of the power transmission apparatus 1, a temperature sensor for monitoring heat of a foreign object interposed between the power transmission inductor 15 and a power reception inductor 21 to be described below, a sensor for monitoring a foreign object with an electromagnetic wave radar or an ultrasonic radar, a sensor, such as an RFID, for detecting a position of the power reception inductor 21, and a sensor used for wireless power transmission between the power transmission apparatus 1 and the power reception apparatus 2, such as an ammeter or a voltmeter for detecting transmitted high-frequency power.

The communication unit 14 can perform communication with a communication unit 27, to be described below, of the power reception apparatus 2. The communication unit 14 receives a power receiving condition of the power reception apparatus 2 or transmits a power transmitting condition of the power transmission apparatus 1.

The power transmission inductor 15 has a magnetic core and a winding wire portion (not illustrated). The magnetic core is formed of, for example, ferrite, and the winding wire portion is formed of copper wire. The power transmission inductor 15 may be a solenoid form in which the winding wire portion is wound around the magnetic core, or may be a spiral form in which the winding wire portion is disposed on a surface of the magnetic core.

The power reception apparatus 2 includes a power reception inductor 21 for receiving a high-frequency power by mutual inductance with the power transmission inductor 15 of the power transmission apparatus 1, a capacitor unit 22 connected to the power reception inductor 21, a rectifier 23 for converting an alternating current received via the capacitor unit 22 into a direct current, a DC-DC converter 24 for changing a voltage conversion ratio based on an operating voltage of the load 28, a control unit 25 for controlling each unit of the power reception apparatus 2, a sensor unit 26, and a communication unit 27. When the received high-frequency power is controlled by the power transmission apparatus 1 side, the DC-DC converter 24 can be omitted.

The power reception inductor 21 has a magnetic core and a winding wire portion (not illustrated). The magnetic core is formed of, for example, ferrite, and the winding wire portion is formed of copper wire. The power reception inductor 21 has a structure similar to that of the power transmission inductor 15, and may be a solenoid form in which the winding wire portion is wound around the magnetic core, or may be a spiral form in which the winding wire portion is disposed on a surface of the magnetic core.

The sensor unit 26 has, for example, a temperature sensor for monitoring heat generation of the power reception apparatus 2, a temperature sensor for monitoring heat of a foreign object interposed between the power reception inductor 21 and the power transmission inductor 15, a sensor for monitoring the foreign object with an electromagnetic wave radar or an ultrasonic radar, a sensor, such as an RFID, for detecting a position of the power transmission inductor 15, and a sensor used for wireless power transmission between the power transmission apparatus 1 and the power reception apparatus 2, such as an ammeter or a voltmeter for detecting received high-frequency power. The communication unit 27 can perform communication with the communication unit 14 of the power transmission apparatus 1. The communication unit 27 transmits a power receiving condition of the power reception apparatus 2 or receives a power transmitting condition of the power transmission apparatus 1.

The control unit 25 controls the received high-frequency power (high-frequency power supplied to the load 28) based on information obtained by the communication unit 27 through communication with the power transmission apparatus 1 or a detection result of the sensor unit 26.

Fig. 2 illustrates an example of a case where the wireless power transmission system illustrated in Fig. 1 is applied to an electric vehicle 30. The power reception apparatus 2 is installed in the electric vehicle 30 as electrical equipment. High-frequency power is transmitted from the power transmission inductor 15 connected to the power source unit 11 to the power reception inductor 21 via the mutual inductance. Then, a battery 34 corresponding to the load 28 is charged via an electric power control device 32 (the rectifier 23, the DC-DC converter 24, the control unit 25, and the like). In Fig. 2, for the convenience of description, illustrations of the control unit 12, the sensor unit 13, and the communication unit 14 of the power transmission apparatus 1, and the sensor unit 26 and the communication unit 27 of the power reception apparatus 2 are omitted.

As illustrated in Fig. 2, the power transmission inductor 15 is installed on a surface of the ground or in the ground. The electric vehicle 30 is parked in such a manner that the power reception inductor 21 is located above the power transmission inductor 15.

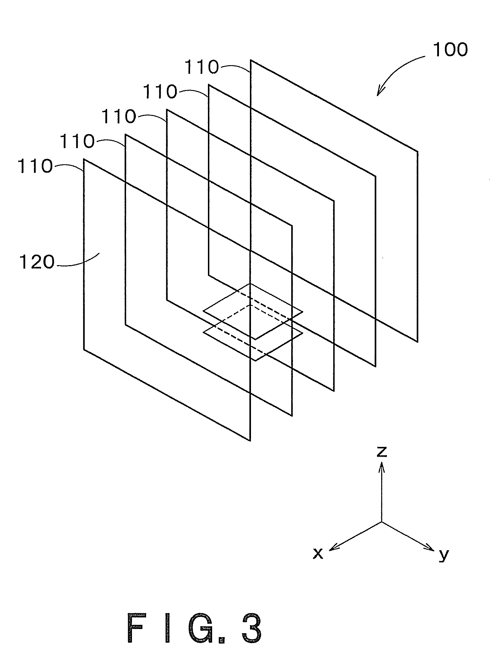

Fig. 3 illustrates a schematic structure of an electromagnetic wave leakage prevention device 100 according to the present embodiment. The electromagnetic wave leakage prevention device 100 includes a plurality of conductive loops (loop lines) 110 disposed at predetermined intervals. The loops 110 are, for example, formed of copper. As illustrated in Fig. 3, the wireless power transmission system illustrated in Fig. 1 is disposed within a region surrounded by the loops 110. For example, the loops 110 and the power transmission system having the power transmission apparatus 1 are installed. The electric vehicle (see Fig. 2) having the power reception apparatus 2 is moved in an x-axis direction in Fig. 3, entered the electromagnetic wave leakage prevention device 100 via an opening portion 120 thereof, and parked at a place where the power reception apparatus 2 is located above the power transmission apparatus 1.

Here, a winding direction of the loops 110 is not perpendicular to a winding direction of the winding wire of the power transmission inductor 15 of the power transmission apparatus 1 or a winding direction of the winding wire of the power reception inductor 21 of the power reception apparatus 2. By providing the loops 110 with such winding direction, when the power transmission is performed between the power transmission inductor 15 and the power reception inductor 21, an induced current flows to the loops 110, and a leaked electromagnetic field is canceled.

The winding direction of the loops 110, which is not perpendicular to the winding direction of the winding wire of the power transmission inductor 15 or that of the power reception inductor 21, is, for example, the same winding direction as the winding wire of the power transmission inductor 15 or the winding wire of the power reception inductor 21. When the winding direction of the loops 110 is set in such direction, the highest effect of canceling the leaked electromagnetic field can be achieved.

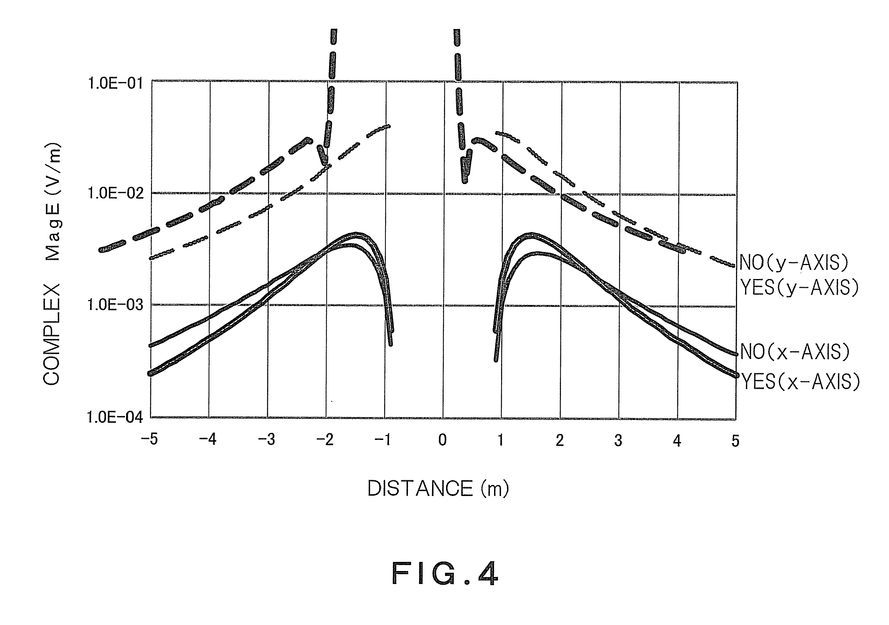

Fig. 4 illustrates changes in electric field intensity in an x-axis direction and a y-axis direction in a case where the electromagnetic wave leakage prevention device 100 is installed and a case where the device 100 is not installed. The x-axis direction and the y-axis direction respectively correspond to the x-axis direction and the y-axis direction illustrated in Fig. 3. Here, the electromagnetic wave leakage prevention device 100 has five loops 110 disposed in the x-axis direction at intervals of 50 cm. In other words, a distance between both ends of the loops 110 (a size of the electromagnetic wave leakage prevention device 100 in the x-axis direction) is 2 m. Further, a size of the electromagnetic wave leakage prevention device 100 in the y-axis direction (size of the loops 110 in the y-axis direction) is set to 2 m. Moreover, the power transmission apparatus 1 and the power reception apparatus 2 are disposed in the center of the electromagnetic wave leakage prevention device 100. A distance on the abscissa in Fig. 4 is based on positions of the power transmission apparatus 1 and the power reception apparatus 2.

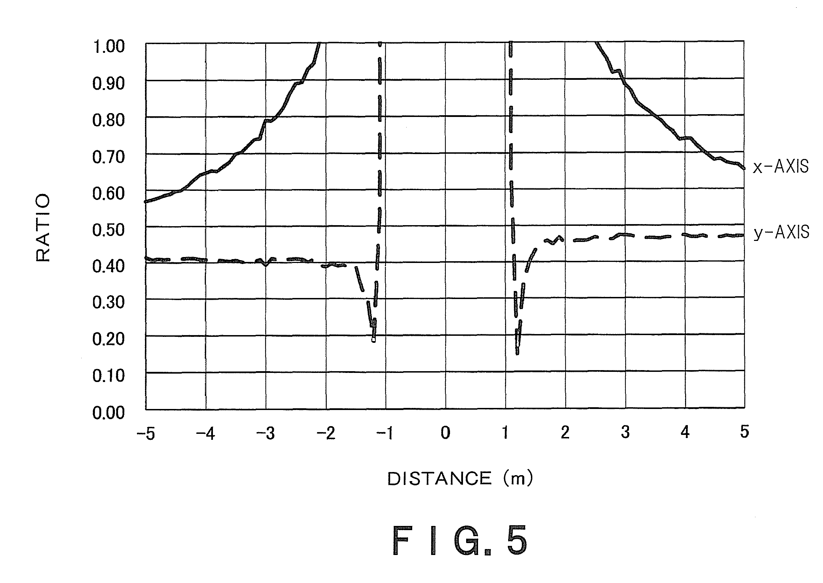

Further, Fig. 5 illustrates reduction ratios of a leaked electric field in the x-axis direction and the y-axis direction due to the installation of the electromagnetic wave leakage prevention device 100.

From Figs. 4 and 5, it is found that the leaked electric field is reduced in the x-axis direction and the y-axis direction by the electromagnetic wave leakage prevention device 100. In particular, it is found that the leaked electric field is greatly reduced in the y-axis direction.

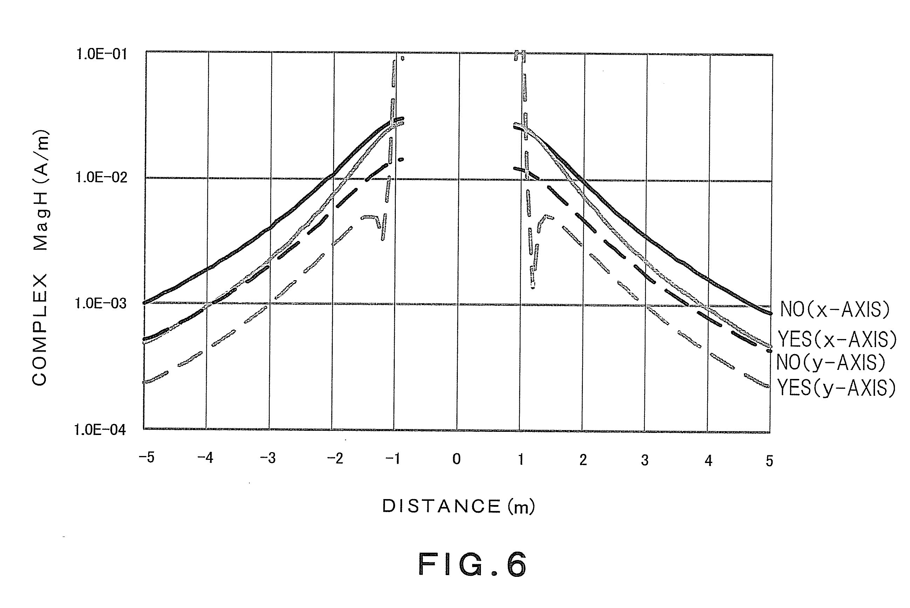

Fig. 6 illustrates changes in magnetic field intensity in the x-axis direction and the y-axis direction in a case where the electromagnetic wave leakage prevention device 100 is installed and a case where the device 100 is not installed.

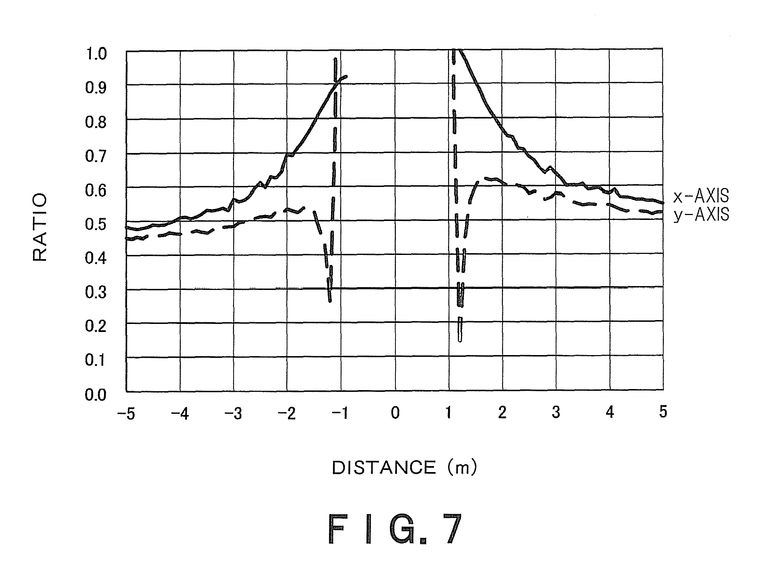

Further, Fig. 7 illustrates reduction ratios of a leaked magnetic field in the x-axis direction and the y-axis direction due to the installation of the electromagnetic wave leakage prevention device 100.

From Figs. 6 and 7, it is found that the leaked magnetic field is reduced in the x-axis direction and the y-axis direction by the electromagnetic wave leakage prevention device 100. In particular, it is found that the leaked magnetic field is greatly reduced in the y-axis direction.

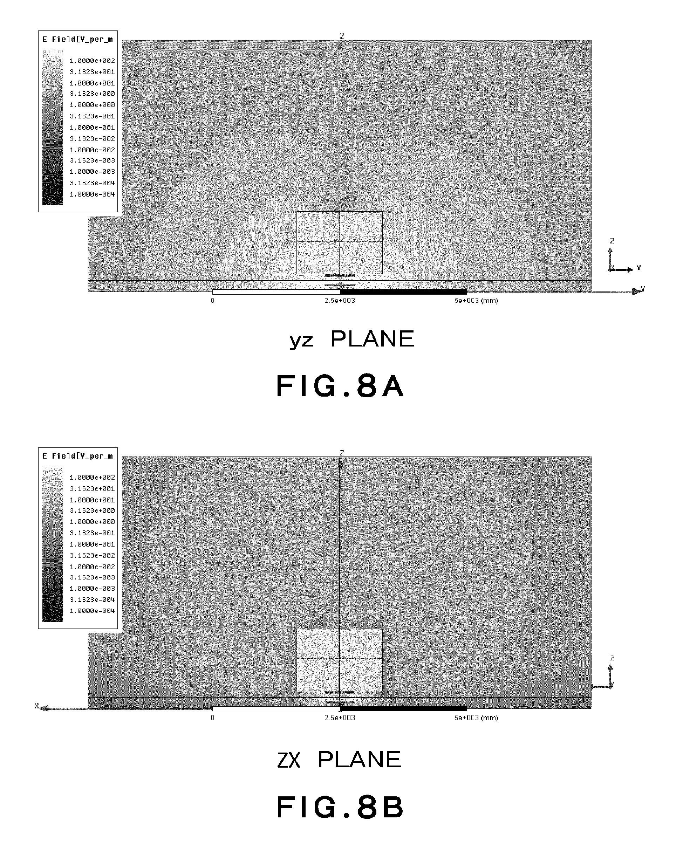

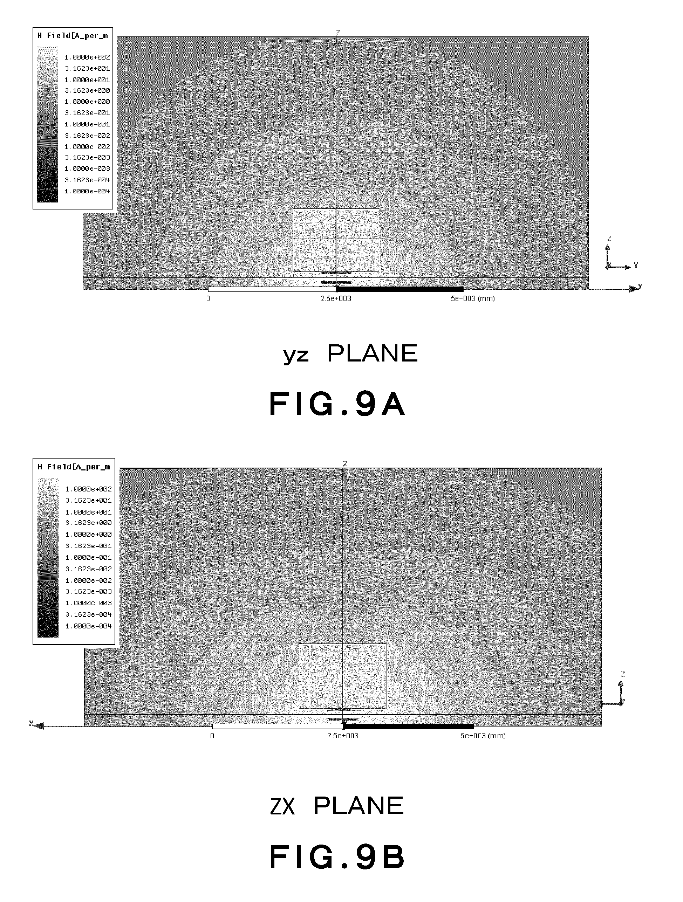

Figs. 8A and 8B respectively illustrate electric field intensity distributions in a yz plane and a zx plane in a case where the electromagnetic wave leakage prevention device 100 is not installed. Further, Figs. 9A and 9B respectively illustrate magnetic field intensity distributions in the yz plane and the zx plane in the case where the electromagnetic wave leakage prevention device 100 is not installed.

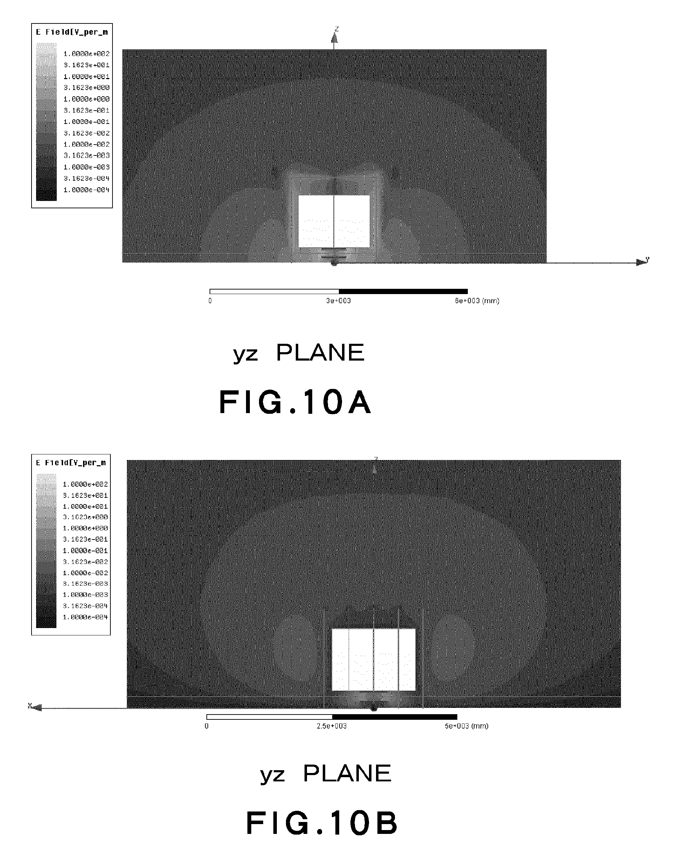

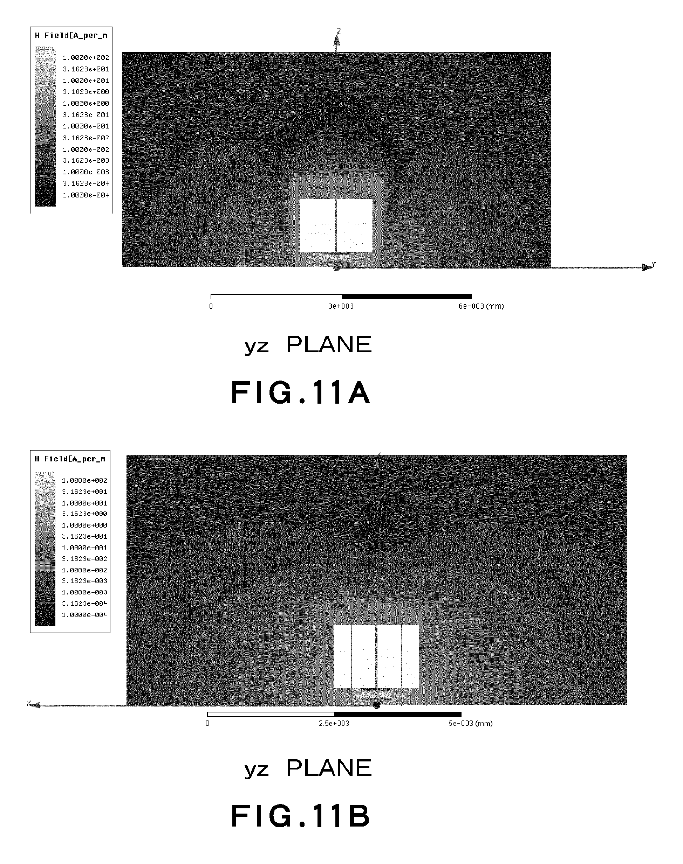

On the other hand, Figs. 10A and 10B respectively illustrate electric field intensity distributions in the yz plane and the zx plane in a case where the electromagnetic wave leakage prevention device 100 is installed. Further, Figs. 11A and 11B respectively illustrate magnetic field intensity distributions in the yz plane and the zx plane in the case where the electromagnetic wave leakage prevention device 100 is installed.

From Figs. 8 to 11B, it is found that the leaked electric field and the leaked magnetic field are reduced by the electromagnetic wave leakage prevention device 100 not only in the x-axis and y-axis directions but also in the z-axis direction.

Since it is necessary that the induced current for canceling the leaked electromagnetic field flows into the loops 110, a diameter of the loop 110 is greater than or equal to a surface thickness. A surface thickness $\delta$ can be obtained according to the following formula. In the formula, $\omega$ is angular frequency, $\mu$ is permeability, and $\sigma$ is conductivity.

$$\delta = \sqrt{\frac{2}{\omega\mu\sigma}}$$

In this way, according to the present embodiment, leakage of the electromagnetic wave in the wireless power transmission can be prevented by the electromagnetic wave leakage prevention device 100 with a simple structure having the plurality of loops in the same winding direction as the power transmission inductor 15 or the power reception inductor 21.

The electromagnetic wave leakage prevention device 100 may be covered with an insulation resin sheet or the like. With this configuration, while an electric vehicle or the like is charged by the wireless power transmission, the vehicle can be protected from the rain or the like. Further, direct contacts with the loops 110, into which the induced current flows, from an outside of the electromagnetic wave leakage prevention device 100 can be prevented. Moreover, each loop 110 may be covered with an insulator.

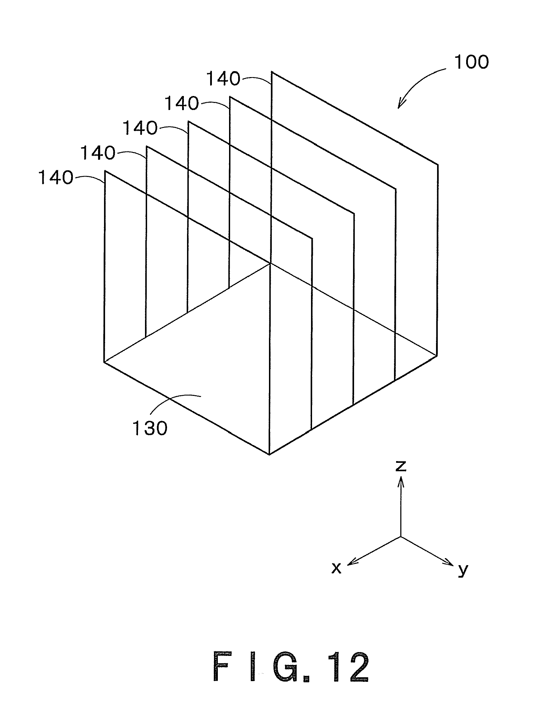

In the above-described embodiment, the electromagnetic wave leakage prevention device 100 is structured by the plurality of loops 110. However, as illustrated in Fig. 12, a conductor plate 130 may be provided, and loops may be formed by connecting both ends of conductive wires 140 to this conductor plate 130. The conductor plate 130 is, for example, an aluminum plate. In this case as well, a winding direction of the loops formed by the conductor plate 130 and the conductive wires 140 is not perpendicular to the winding direction of the power transmission inductor 15 or the power reception inductor 21. In Fig. 12, a bottom surface of the electromagnetic wave leakage prevention device 100 is the conductor plate 130, but a side surface or an upper surface thereof may be the conductor plate 130.

In the above-described embodiment, the electromagnetic wave leakage prevention device 100 includes the plurality of conductive loops 110. However, the loop 110 may be one.

In the above-described embodiment, since it is easy to install the rectangular loop on the ground or the like, a configuration of the loop 110 is rectangular (substantially rectangular). However, the loop 110 may have other configurations, such as a semicircle. If the loop 110 is semicircular, the loop 110 can be easily installed on the ground or the like by placing a linear portion thereof at the bottom of the electromagnetic wave leakage prevention device 100.

Further, a sensor for detecting an entry of a foreign object (e.g., a person or bird) into the electromagnetic wave leakage prevention device 100 may be provided. This sensor is connected to the control unit 12 directly or via the communication unit 14 of the power transmission apparatus 1. When the sensor detects the entry of a foreign object, the control unit 12 stops power transmission. The sensor unit 13 of the power transmission apparatus 1 may detect the entry of a foreign object into the electromagnetic wave leakage prevention device 100.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A power transmission system, comprising:

   a power transmission apparatus comprising a power source unit supplying a high-frequency power, and a power transmission inductor including a magnetic core and a winding wire portion and wirelessly transmitting the high-frequency power from the power source unit to a power reception apparatus by mutual inductance; and
   an electromagnetic wave leakage prevention device including one conductive loop or a plurality of conductive loops disposed at predetermined intervals,
   wherein the power transmission apparatus is disposed in the loop(s), and
   a winding direction of the loop(s) is not perpendicular to a winding direction of the winding wire portion.

2. The system according to Claim 1, wherein the loop(s) is/are wound in the same direction as the winding wire portion.

3. The system according to Claim 1, wherein the plurality of loops includes a conductor plate and a plurality of conductive wires, and both ends of the conductive wires are connected to the conductor plate.

4. The system according to Claim 1, further comprising a sensor detecting an entry of a foreign object into the electromagnetic wave leakage prevention device,
   wherein when the sensor detects the entry of the foreign object, the power transmission apparatus stops transmitting the high-frequency power.

5. The system according to Claim 1, wherein each loop is covered with an insulator.

6. The system according to Claim 1, further comprising an insulation sheet covering the plurality of loops.

7. The system according to Claim 1, wherein a configuration of the loop is rectangular or semicircular.

POWER RECEIVING DEVICE

28 — LOAD

23,24 — RECTIFIER/DC-DC CONVERTER

22 — CAPACITOR UNIT

2

21

CONTROL UNIT

25

SENSOR UNIT

26

COMMUNICATION UNIT

27

1

15

11 — POWER SOURCE UNIT

SENSOR UNIT

13

CONTROL UNIT

COMMUNICATION UNIT

12

14

POWER TRANSMITTING DEVICE

# FIG. 1

30

34

32

BATTERY

ELECTRIC POWER CONTROL DEVICE

11

POWER SOURCE UNIT

21

15

# FIG. 2

F I G. 3

FIG.4

F I G. 5

EP 2 773 015 A2

FIG.6

EP 2 773 015 A2

F I G. 7

DISTANCE (m)

RATIO

x-AXIS
y-AXIS

yz PLANE

FIG.8A

ZX PLANE

FIG.8B

yz PLANE

# FIG.9A

ZX PLANE

# FIG.9B

yz PLANE

FIG.10A

yz PLANE

FIG.10B

yz PLANE

# FIG.11A

yz PLANE

# FIG.11B

F I G. 12